Europäisches Patentamt

**European Patent Office**

Office européen des brevets

(11) Publication number: **0 221 259**
**B1**

(12) **EUROPEAN PATENT SPECIFICATION**

(45) Date of publication of patent specification: **27.09.89**

(51) Int. Cl.⁴: **F 23 D 14/28**

(21) Application number: **86110928.8**

(22) Date of filing: **07.08.86**

(54) **Burner device.**

(30) Priority: **12.08.85 JP 123630/85 u**

(43) Date of publication of application:
**13.05.87 Bulletin 87/20**

(45) Publication of the grant of the patent:
**27.09.89 Bulletin 89/39**

(84) Designated Contracting States:
**DE FR GB IT NL**

(56) References cited:
**EP-A-0 167 981**
**DE-A-2 824 661**
**DE-A-2 905 021**
**US-A-4 315 732**

(73) Proprietor: **PRINCE INDUSTRIAL
DEVELOPMENT Co., Ltd.
1-1-11, Asakusabashi
Taito-ku Tokyo (JP)**

(72) Inventor: **Yoshinaga, Sadao
1-22-14, Higashisugano
Ichikawa-shi Chiba-ken (JP)**

(74) Representative: **Twelmeier, Ulrich, Dipl.Phys.
et al
Patentanwälte Dr. Rudolf Bauer Dipl.-Ing.Helmut
Hubbuch, Dipl.Phys. Ulrich Twelmeier Westliche
Karl-Friedrich-Strasse 29-31
D-7530 Pforzheim (DE)**

Courier Press, Leamington Spa, England.

## Description

## BACKGROUND OF THE INVENTION

### 1. Field of the Invention

This invention relates to a compact type burner device for use in welding, melting cut, and various metalworks.

### 2. Description of the Prior Art

A burner of this type is disclosed in EP—A—0 167 981 (according to Article 54 (3) EPC). The burner has a construction in which a valve device is superposed and mounted on an ignition device provided on a body which also serves as a fuel tank, and a combustion device is connected to the valve device.

## SUMMARY OF THE INVENTION

This invention is to provide a burner device having a new construction which enables to ignite a gas by an igniter provided to the burner device in a state of being holded and which enables to detach the burner device from a fuel tank.

Accordingly the present invention provides a burner device having the features recited in claim 1. Favourable embodiments of the invention are recited in the dependent claims.

The invention will be described in details according to an embodiment shown in drawings.

## BRIEF DESCRIPTION OF THE DRAWINGS

Drawings indicate an embodiment of the burner device according to this invention.

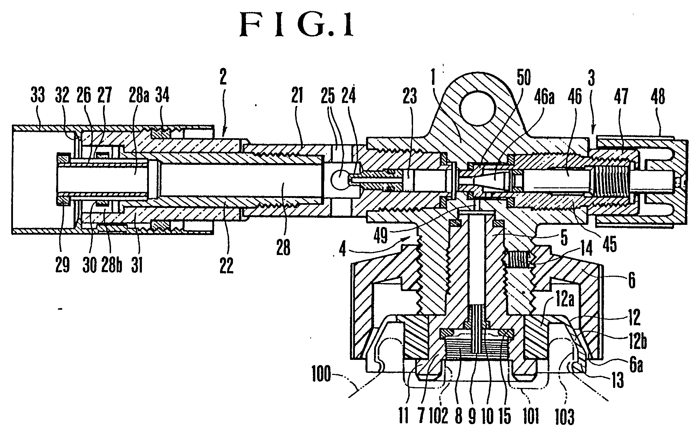

Figure 1 is a longitudinal, sectional front view.

Figure 2 is a plan view which shows a part of the burner device sectionally.

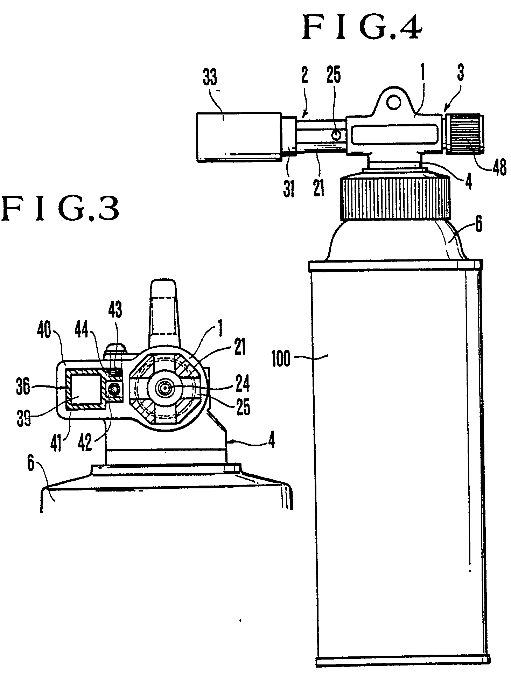

Figure 3 is a sectional view of Figure 2 in line III—III.

Figure 4 is a front view of the burner device secured to a liquefied gas bomb.

Figure 5 is a transverse sectional view at the top end portion of a nozzle device of another embodiment.

Figure 6 is a partial plan view which shows another secured condition of the piezoelectric ignition device.

## DETAILED DESCRIPTION OF THE INVENTION

In drawings, the numeral 1 is a burner device body, at the front and the rear of said burner device body a nozzle device 2 and a valve device 3 for controlling a quantity of flowing gas being screwed thereto respectively. Further, a cylindrical connecting portion 4 is integrally formed at the lower side thereof.

Screws are provided to the inner and the outer sides of the connecting portion 4, at the inner portion of said connecting portion 4 and the periphery of the same a connecting member 5 and a cap-shaped clamping member 6 being rotatively screwed respectively.

The connecting member 5 is a hollow body, the lower portion thereof protruding from the outer end of the connecting portion 4 to form an intake opening 7 having a larger diameter than that of the connecting portion 4. A screw thread 8 is provided at the inner side of said intake opening 7. The inner diameter of the intake opening 7 is formed slightly larger than the outer diameter of a closed portion 102 of the bomb protruded at the mid-position of a mountain cap 101 of the bomb 100, and an injection stem 9 for opening the valve of the closed portion is protruded downwardly at the mid-position of the inner portion by being engaged with a sleeve 10.

Further, the periphery of the lower end of the intake opening 7 is formed to be a flange 11 and the mid-portion 12a of the cap-shaped holder 12 is rotatively fitted downwardly between the flange 11 and the lower end of the connecting portion 4. The mid-portion 12a has a block shape in sectional area and its diameter is formed to be approximately equal to the inner diameter of the top periphery 103 of the mountain cap 101. Further, at the lower end of the inner side of the periphery wall 12b which is possible to decrease the diameter by equipping a plurality of divided grooves, a protrusion 13 engaged with the lower portion of the outer edge of the top periphery 103 is formed integrally.

The above clamping member 6 has a size capable of containing the holder 12 therein and is provided with a taper surface 6a which urges the protrusion 13 to the periphery edge 103 of the top portion by pressing the holder 12 to the inner side of the lower edge. Further, the numeral 14 is a stopping screw and 15 is a packing in the intake opening.

The above nozzle device 2 is provided with a nozzle base pipe 21 screwed to the burner body 1 at the rear end thereof and a nozzle tube 22 connected with the top end portion of the nozzle base pipe 21.

A spray nozzle 24 is provided together with a filter 23 in the rear of the nozzle pipe 21 interiorly, while an air intake hole 25 is bored at the wall portion of the spray opening side.

At the top end portion of the above nozzle tube 22, a cylindrical nozzle head 26 which forms a burner is equipped. At the periphery of the nozzle head 26, a plurality of spline grooves are formed, and the rear end portion of the nozzle head 26 is inserted integrally into the opening of the nozzle tube at the top end thereof and together with it a part of a flow passage 28 is allowed to divide around the nozzle head so that the main passage 28a and a sub-passage 28 may be separately formed.

Further, ring members 29, 30 are inserted into the opening end and the periphery of the nozzle head 27 respectively. The ring member 29 is in a fixed state and serves as an electrode and the ring member 30 is movable and operates as a resistant body of the gas flow.

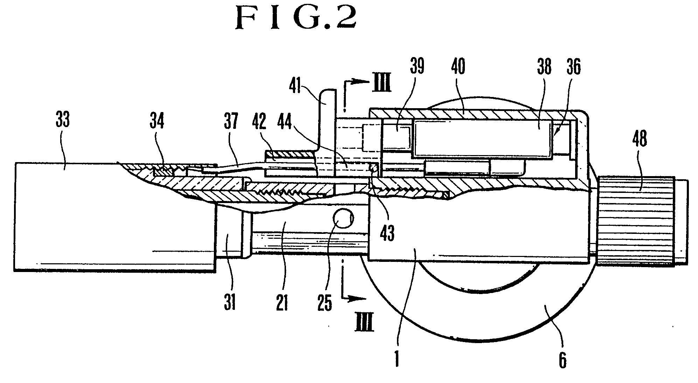

At the periphery of said nozzle tube 22, an insulating cylinder 31 which serves as an electrode stand and surrounds the sub-passage 28b is secured. The insulating cylinder 31 is formed with ceramic and has a step portion and a groove into which a whirl-stop at the inside of the burner cover is inserted, at the outer side thereof. Further, the burner cover 33 protrudes a discharge electrode 32 which serves as a latching member into the inner side is engaged with said step portion. The burner cover 33 is fixed with said discharge electrode 32 and a nut 34 in the rear portion, and connected with a lead wire 37 of a piezoelectric ignition device 36 provided at the side of the body 1 (See Figure 2).

The connection with the lead wire 37 can be easily performed by inserting the top end portion of the lead wire 37 into a clearance formed between the insulating cylinder 31 and the burner cover 33, and contacting the top end portion of the lead wire to the burner cover 35.

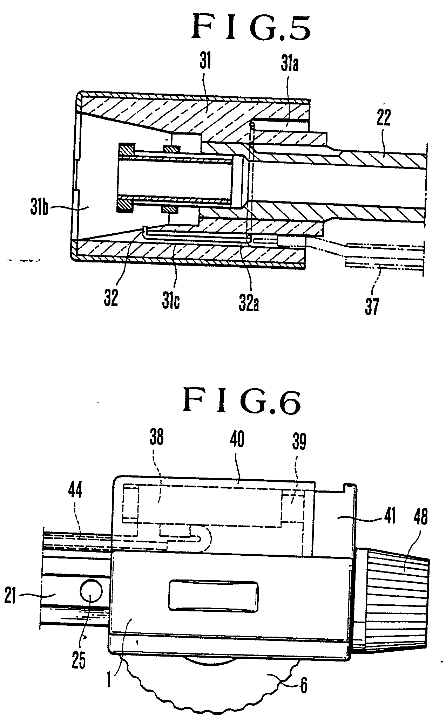

The embodiment shown in Figure 5 presents a case wherein the burner cover is formed with the insulating cylinder 31 described above, at the rear end portion of said insulating cylinder 31 a dent 31a being formed coaxially. Further, a hole 31c is bored extending over the dent 31a and an opening 31b in front of the burner at the top end of the cylinder 31.

A metal wire 32a which becomes the electrode 32 is inserted into said dent 31a and said hole 31c, and the top end portion of said lead wire 37 is inserted into the inner portion of the dent 31a toward the metal wire 32a.

The piezoelectric ignition device 36 comprises a fixed member 38 which contains a piezoelectric element and a spring for impact therein and a removable member 39 inserted into said fixed member and always suppressed outwardly by the spring for impact as similar to that used for gas lighter or the like, said electronic ignition device being housed in a casing 40 integrally formed at the side of the burner body 1.

Further, in the removable member 39, a housing groove 42 of said lead wire 37 is formed at the inside of an operating device 41 which slides along the inside of the casing, and on the surface a groove 44 which guides a screw vis 43 for prevention of sliding off screwed in the groove 44 from the burner body side is provided along the moving direction.

Figure 6 shows a case wherein the piezoelectric ignition device 36 is contained in the casing 40 at the side of the burner body 1 with its back toward the casing. In this case, since the operation device 41 is protrudingly positioned from the rear end of the casing 40, the groove to contain said lead wire at the inside of the operation device becomes unnecessary. Further, since the end surface of the operation device 41 contacts with the inner end face of a valve operation device described hereafter, a screw vis for prevention of sliding off and its guide groove described above become unnecessary.

The above valve device 3 is constituted of a cylinder 45 screwed into the rear portion in the burner body 1 and a valve operating device 48 which covers the valve stem 46 inserted into the cylinder 45 and a stopper member 47 integrally formed with the needle valve 3 and screwed to the rear end of the cylinder 45.

The inner portion of the top end of said cylinder 45 is formed to be a valve seat 50 which pass through the passage 49 on the body side and the filter side described above and the valve body 46a of said needle valve stem 46 in the cylinder screwed with the valve seat 50 rotatively is inserted therein.

In order to connect such burner device to the liquefied gas bomb 100, the above intake opening 7 is inserted into the inner side of the top periphery edge 103 of the bomb 100 together with the holder mid-portion 12a and thereafter the clamping member 6 downwardly. By this, the circumferential side wall 12b of the holder 12 is pressed to the top periphery edge 103, whereby the protrusion 13 is inserted into the lower side of the periphery edge. In the case, where a screw is provided around the closed portion 102 of the bomb, the holder 12 is connected to the bomb 100 by rotating the clamping member 6 after the screw 8 positioned at the inner side of the intake opening 7 has been inserted into the closed portion 102 of the bomb by pivoting the screw.

By this connection, the closed portion 102 of the bomb is pushed open by the injection stem 9 and the liquefied gas is sprayed from the inside of the connecting member 5 to the passage 28 in the nozzle pipe 21 by an injection nozzle through the main body passage 49 — valve seat 50 — filter 23. And after intaking the air, it flows out to the outward through the main passage 28a and the sub-passage 28b.

At this time, when the piezoelectric ignition device 36 is operated, a discharge spark which crosses the sub-passage 28 is generated between the discharge electrode 32 at the inside of the burner cover and a ring member 29 at the nozzle head side whereby the liquefied gas is ignited.

Accordingly, in this invention wherein the burner device is constituted so as to be able to connect to the liquefied gas bomb with the intake opening for connecting member internalized in the connecting portion at the lower side of the burner body, the holder fitted at the intake opening and the clamping member rotatively screwed with around the outer circumference of the connecting portion, the liquefied gas bomb can be surely connected by either one of them. Further, in some case, since the bomb can be connected by both, this invention has such advantage that a commercial gas bomb is available for the burner device.

Further, since this is provided with a piezoelectric ignition device, there is no necessity of another ignition device to be provided in the case of use. Furthermore, since the ignition by discharge is performed by a temporary ignition to a gas flow from the sub-passage having a small quantity of gas flow and then ignited to a gas flow from the main passage having a large quantity of gas flow, the discharge can be performed always surely even if the energy is small. Further, the discharge is performed at the top end or the inside of the insulating cylinder in construction, there is no peril of the electric shock by discharge.

## Claims

1. A burner device comprising a nozzle device (2), a valve device (3) provided at the rear thereof and a piezoelectric ignition device (36) mounted at the side thereof, said nozzle device (2) and said valve device (3) being communicated with each other and a passage (49) provided in proximity to the end of the valve device (3).

said nozzle device (2) having a spray nozzle (24) within the rear portion of a tube body (21) and positioned near an air intake hole 25, and comprising a cylindrical nozzle head (26) engaged at the end of the tube body which forms a burner and defines a passage (28) within the tube body (21) into a central main passage (28a) and a peripheral sub-passage (28b) and further comprising a discharge electrode (32) connected to said piezoelectric ignition device (36) and providing internally of a burner cover (33) so that said discharge electrode (32) is directed towards the nozzle head (26); and

said valve device (3) comprising a cylinder (45), a valve stem (46) rotatably screwed to the cylinder (45), a valve body (46a) located at the end of the valve stem to open and close a valve seat (50) for communication between the said passage (49) and the tube body (21) on the side of the nozzle device, and a valve operator (48) at the end of the valve stem protruded outside, characterized in that it comprises a burner body (1) at the front of which is mounted the nozzle device (2), at the side of which is mounted the ignition device (36) and which is internally provided at the rear thereof with the valve device (3) so that the nozzle device (2) and the valve device (3) communicate within the burner body (1) and the said passage (49) in proximity to the end of the valve device (3) is provided on the side of the burner body (1), that the tube body (21) is screwed to the burner body (1),

that said nozzle device (2) has an insulating cylinder (31) which serves as an electrode stand and surrounds the sub-passage (28b) fitted in the end of the tube body, and a burner cover (33) provided externally of said insulating cylinder (31),

that said valve device (3) is screwed into the rear portion of the burner body (1),

and that said valve seat (50) is provided at the end of the said cylinder (45).

2. A burner device according to claim 1 in which said piezolectric ignition device (36) comprises a fixed member (38) which contains a piezoelectric element and a spring for impact therein and a removable member (39) inserted into said fixed member and always suppressed outwardly by the spring for impact, said removable member (39) being provided with an operator (41) and housed and fixed to a casing (40) formed integral with the side of the burner body (1), a lead wire (37) being led to said discharge electrode (32) along the tube body of said nozzle device.

3. A burner device according to claims 1 and 2 wherein said piezoelectric ignition device (36) is housed and fixed in the casing (40) formed integral with the side of the burner body (1) with the operator (41) of the removable member (39) exposed to the front of the burner body (1).

4. A burner device according to claims 1 and 2 wherein said piezoelectric ignition device (36) is housed and fixed in the casing (40) formed integral with the side of the burner body (1) with the operator (41) of the removable member (39) positioned at the rear side of the burner body (1).

5. A burner device according to claim 1 wherein said burner body (1) is integrally provided at the lower side with a connecting portion (4) with a liquefied gas bomb, said connecting portion (4) has a cylindrical shape and a cap-shaped clamping member (6) rotatively screwed in the outer periphery thereof, a hollow connecting member (5) being provided therein and having a lower portion formed in an intake operating (7), said intake opening (7) being provided with a downwardly-directed pouring stem.

6. A burner device according to claims 1 and 5 wherein the intake opening (7) of said connecting member (5) is protruded from the lower end of the connecting portion (4), and a cap-shaped holder (12) capable of being reduced in diameter having an engaging protrusion (13) in an inner edge thereof is fitted in the periphery of the intake opening (7).

7. A burner device according to claim 1 wherein said burner cover (33) is formed of a conductive metal and internally provided with the discharge electrode (32) which is formed to be protruded.

8. A burner device according to claim 1 wherein said discharge electrode (32) is formed from a metallic wire (32a) which extends through the insulating cylinder (31).

## Patentansprüche

1. Brennervorrichtung mit einer Düsenvorrichtung (2), mit einer an deren hinterem Ende vorgesehenen Ventilvorrichtung (3) und mit einer seitlich daran befestigten piezoelektrischen Zündvorrichtung (36), wobei die Düsenvorrichtung (2) und die Ventilvorrichtung (3) miteinander in Verbindung stehen und in der Nähe eines Endes der Ventilvorrichtung (3) ein Kanal (49) vorgesehen ist;

die Düsenvorrichtung (2) besitzt eine innerhalb des hinteren Bereichs eines Rohrkörpers (21) und in der Nähe einer Lufteinlaßöffnung (25) angeordnete Sprühdüse (24) und hat einen mit dem Ende des Rohrkörpers in Eingriff stehenden zylindrischen Düsenkopf (26), wobei der Rohrkörper einen Brenner bildet und einen Kanal (28) innerhalb des Rohrkörpers (21) bestimmt, welcher in einen zentralen Hauptkanal (28a) und einen peripheren Nebenkanal (28b) unterteilt ist, und hat des weiteren eine mit der piezoelektrischen Zündvorrichtung (36) verbundene Sprühelektrode (32), welche innerhalb einer Brennerumhüllung (33) so vorgesehen ist, dass die Sprühelektrode (32) gegen den Düsenkopf (26) gerichtet ist; und die Ventilvorrichtung (3) hat einen Zylinder (45), einen drehbar in den Zylinder (45) eingeschraubten Ventilschaft (46), mit einem an einem Ende des Ventilschaftes (46) angeordneten Ventilkörper (46a) zum Öffnen und Schließen eines Ventilsitzes (50), welcher eine Verbindung zwischen dem Kanal (49) und dem an der Seite der Düsenvorrichtung (2) angeordneten Rohrkörper (21) herstellt und einen am Ende des Ventilschaftes (46) nach aussen vorstehen Ventilbedienungsteil (48),

dadurch gekennzeichnet, dass sie ein Brennergehäuse (1) aufweist, an deren vorderen Teil die Düsenvorrichtung (2) und an dessen Seite die Zündvorrichtung (36) befestigt ist und welche hinten im Inneren die Ventilvorrichtung (3) aufweist, so dass die Düsenvorrichtung (2) und die Ventilvorrichtung (3) innerhalb des Brennergehäuses (1) miteinander in Verbindung stehen und der in der Nähe des Endes der Ventilvorrichtung (3) liegende Kanal (49) seitlich im Brennergehäuse (1) vorgesehen ist,

dass der Rohrkörper (21) mit dem Brennergehäuse (1) verschraubt ist,

dass die Düsenvorrichtung (2) einen isolierenden Zylinder (31) hat, welcher als Elektrodenhalterung dient und den Nebenkanal (28b) umgibt, welcher in das Ende des Rohrkörpers (21) eingefügt ist und ausserhalb des isolierenden Zylinders (31) eine Brennerumhüllung (33) vorgesehen ist,

dass die Ventilvorrichtung (3) im rückwärtigen Bereich des Brennergehäuses (1) eingeschraubt ist und,

dass der Ventilsitz (50) am Ende des Zylinders (45) vorgesehen ist.

2. Brennervorrichtung nach Anspruch 1, in welcher die piezoelektrische Zündvorrichtung (36) ein festes Teil (38), welches ein piezoelektrisches Element und eine Spannfeder enthält und ein in das feste Teil eingesetzten Bewegungsteil (39) aufweist, welches durch die Spannfeder stets nach aussen gedrückt wird, wobei das Bewegungsteil (39) mit einem Bedienungsteil (41) versehen und in einem Gehäuse (40) untergebracht und besfestigt ist, welches einen integralen Bestandteil der Seite des Brennergehäuses (1) bildet, und wobei einem Leitungsdraht (37) entlang des Rohrkörpers der Düsenvorrichtung zu der Sprühelektrode (32) geführt ist.

3. Brennervorrichtung nach Anspruch 1 und 2, in welcher die piezoelektrische Zündvorrichtung (36) in dem Gehäuse (40) untergebracht und befestigt ist, welches einen integralen Bestandteil mit der Seite des Brennergehäuses (1) bildet, wobei das Bedienungsteil (41) des Bewegungsteiles (39) im vorderen Bereich des Brennergehäuses (1) freiliegt.

4. Brennervorrichtung nach Anspruch 1 und 2, in welchem die piezoelektrische Zündvorrichtung (36) in einem Gehäuse (40) untergebracht und befestigt ist, welches einen integralen Bestandteil mit der Seite des Brennergehäuses (1) bildet, wobei das Bedienungsteil (41) des Bewegungsteils (39) an der Hinterseite des Brenners (1) angeordnet ist.

5. Brennervorrichtung nach Anspruch 1, in welcher ein Verbindungsbereich (4) mit einer Flüssiggasflasche einen integralen Bestandteil des Brennergehäuses (1) an seiner Unterseite bildet, wobei der Verbindungsbereich (4) eine zylinderförmige Gestalt ein kappenförmiges Klemmteil (6) aufweist, welches drehbar mit dessen Aussenbereich verschraubt ist und wobei im Verbindungsbereich (4) ein hohles Verbindungsteil (5) mit einer im unteren Bereich ausgebildeten Eintrittsöffnung (7) angeordnet ist, in welcher sich ein abwärts gerichteter Versorgungsschaft befindet.

6. Brennervorrichtung nach Anspruch 1 und 5, in welcher die Eintrittsöffnung (7) des Verbindungsteils (5) über das untere Ende des Verbindungsbereichs (4) vorsteht und ein kappen förmiger Halter (12), dessen Durchmesser sich verkleinern läßt und an seiner inneren Kante einen zum Eingriff bestimmten Vorsprung (13) hat, die Eintrittsöffnung (7) umgebend am Verbindungsteil (5) angebracht ist.

7. Brennervorrichtung nach Anspruch 1, in welcher die Brennerumhüllung (33) aus einem leitenden Metall ausgebildet ist und innen mit der vorstehenden Sprühelektrode (32) versehen ist.

8. Brennervorrichtung nach Anspruch 1, in welcher die Sprühelektrode (32) aus einem metallischen Draht (32a) gebildet ist, der sich durch den isolierenden Zylinder (31) erstreckt.

**Revendications**

1. Un dispositif formant brûleur comprenant un dispositif formant buse (2), un dispositif formant soupape (3) situé en son arrière et un dispositif d'allumage piézoélectrique (36) monté sur son côte, ledit dispositif formant buse (2) et ledit dispositif formant soupape (3) étant en communication l'un avec l'autre et avec un passage (49) situé à proximité de l'extrémité du dispositif formant soupape (3), ledit dispositif formant buse (2) comportant une buse de pulvérisation (24), située dans la partie arrière d'un corps tubulaire (21) et positionnée à proximité d'un orifice d'admission d'air (25), et comprenant une tête de buse cylindrique (26) engagée dans l'extrémité du corps tubulaire qui forme un brûleur et définit un passage (28) formant dans le corps tubulaire (21) un passage principal central (28a) et un passage secondaire périphérique (28b), et comprenant en outre une électrode de décharge (32), reliée audit dispositif d'allumage piézoélectrique (36) et disposée à l'intérieur d'un couvercle de brûleur (33) de telle sorte que ladite électrode de décharge (32) soit dirigée vers la tête de buse (26); et ledit dispositif formant soupape (3) comprenant un cylindre (45), une tige de soupape (46) vissée de façon tournante dans le cylindre (45), un corps de soupape (46a) placé à l'extrémité de la tige de soupape pour ouvrir et fermer un siège de soupape (50) pour une communication entre ledit passage (49) et le corps tubulaire (21) sur le côté du dispositif formant buse, et un organe d'actionnement de soupape (48) à l'extrémité de la tige de soupape dépassant à l'extérieur, caractérisé en ce qu'il comprend un corps de brûleur en avant duquel est monté le dispositif formant buse (2), sur le côté duquel est monté le dispositif d'allumage (36) et qui est pourvu, intérieurement et à son arrière, du dispositif formant soupape (3) de telle sorte que le dispositif formant buse (2) et le dispositif formant soupape (3) communiquant à l'intérieure du corps de brûleur (1) tandis que ledit passage (49), à proximité de l'extrémité du dispositif formant soupape (3), est situé sur le côté du corps de brûleur (1),

en ce que le corps tubulaire (21) est vissé dans le corps de brûleur (1),

en ce que ledit dispositif formant buse (2) comporte un cylindre isolant (31) qui sert de support d'electrode et entoure le passage secondaire (28b) en étant monté dans l'extrémité du corps tubulaire, tandis qu'un couvercle de brûleur (33) est disposé à l'extérieur dudit cylindre isolant (31),

en ce que ledit dispositif formant soupape (3) est vissé dans la partie arrière du corps du brûleur (1),

et en ce que ledit siège de soupape (50) est disposé à l'extrémité dudit cylindre (45).

2. Dispositif formant brûleur selon la revendication 1, dans lequel ledit dispositif d'allumage piézoélectrique (36) comprend un élément fixe (38) qui contient un organe piézoélectrique et un ressort de percussion, ainsi qu'un élément amovible (39) inséré dans ledit élément fixe et toujours poussé vers l'extérieur par le ressort de percussion, ledit élément amovible (39) étant pourvu d'un organe d'actionnement (41) et étant logé et fixé dans un carter (40) formé unitairement avec le côté du corps de brûleur (1), un fil conducteur (37) aboutissant à ladite électrode de décharge (32) en passant le long du corps tubulaire dudit dispositif formant buse.

3. Dispositif formant brûleur selon les revendications 1 et 2, dans lequel ledit dispositif d'allumage piézoélectrique (36) est logé et fixé dans le carter (40) formé unitairement avec le côté du corps de brûleur (1), l'organe d'actionnement (41) de l'élément amovible (39) étant exposé sur l'avant du corps de brûleur (1).

4. Dispositif formant brûleur selon les revendications 1 et 2, dans lequel ledit dispositif d'allumage piézoélectrique (36) est logé et fixé dans le carter (40) formé unitairement avec le côté du corps de brûleur (1), l'organe d'actionnement (41) de l'élément amovible (39) étant positionné sur le côté arrière du corps de brûleur (1).

5. Dispositif formant brûleur selon la revendication 1, dans lequel ledit corps de brûleur (1) est pourvu unitairement, sur le côté inférieur, d'une partie de liaison (4) avec une bouteille de gaz liquéfié, ladite partie de liaison (4) a une forme cylindrique et comporte un élément de blocage (6) en forme de chapeau vissé de façon tournante sur sa périphérie extérieure, un élément creux de raccordement (5) étant prévu à l'intérieur de ladite partie de liaison et comportant une partie inférieure profilée sous forme d'une ouverture d'admission (7), ladite ouverture d'admission (7) étant porvue d'une tige de distribution dirigée vers le bas.

6. Dispositif formant brûleur selon les revendications 1 et 5, dans lequel l'ouverture d'admission (7) dudit élément de raccordement (5) est disposé en saillie de l'extrémité inférieure de la partie de liaison (4) et un support (12) en forme de chapeau, pouvant être réduit en diamètre et comportant une protubérance d'entraînement (13) sur un bord intérieur, est monté sur la périphérie de l'ouverture d'admission (7).

7. Dispositif formant brûleur selon la revendication 1, dans lequel ledit couvercle de brûleur (33) est formé d'un métal conducteur et est pourvu intérieurement de l'électrode de décharge (32) qui est profilée de façon à faire saillie.

8. Dispositif formant brûleur selon la revendication 1, dans lequel ladite électrode de décharge (32) est formée d'un fil métallique (32a) qui s'étend au travers du cylindre isolant (31).

FIG.1

# FIG.2

# F I G.4

# F I G.3

# F I G.5

# F I G.6